# EUROPEAN PATENT SPECIFICATION

(11) **EP 2 331 747 B1**
(45) Date of publication and mention of the grant of the patent: **02.07.2014**
(21) Application number: 09816528.5
(22) Date of filing: 23.09.2009
(51) Int. Cl.: D21C 9/18, B01D 33/067, B30B 9/20, D21C 9/06

(54) **AN APPARATUS FOR WASHING AND/OR DEWATERING PULP**
VORRICHTUNG ZUM WASCHEN UND/ODER ENTWÄSSERN VON PULPE
APPAREIL DESTINÉ À LAVER ET/OU ÉPAISSIR UNE PÂTE À PAPIER

(30) Priority: 24.09.2008 SE 0802028
(43) Date of publication of application: 15.06.2011
(73) Proprietor: Valmet Technologies, Inc., 02150 Espoo (FI)
(72) Inventor: PONTÉN, Fredrik, S-857 34 Sundsvall (SE); BYLANDER, Johan, S-852 37 Sundsvall (SE)
(74) Representative: Groth & Co. KB
(86) International application number: PCT/SE2009/051059
(87) International publication number: WO 2010/036194

(56) References cited:
- EP-A1- 0 706 827
- EP-A1- 1 201 308
- WO-A1-94/15016
- WO-A1-97/22543
- WO-A1-03/004889
- WO-A1-2007/055672
- DE-A1- 4 208 490
- US-A- 3 730 079
- US-A- 3 730 079
- US-A- 4 168 806

## Description

### Technical Field

The present invention relates to an apparatus for washing and/or dewatering pulp comprising a first press roll and a second press roll, each press roll being rotatable about an axis of rotation and having a permeable outer surface, and a vat in which the press rolls are installed. The press rolls define a press nip between them, in which press nip the pulp is pressed, and the apparatus is arranged to feed the pulp in the direction of rotation of the press rolls through the press nip, the first press roll being movable in relation to the second press roll to vary the press nip. The apparatus comprises a first pair of bearing housings provided with bearings in which the ends of the first press roll are journalled.

### Background of the Invention

When producing cellulose-based products, a roll press is frequently used for washing and dewatering the cellulose-based pulp. The pulp is passed between two co-operating press rolls installed in the roll press, the press rolls having a perforated outer surface, a so called mantle surface, whereby the outer surface is permeable to liquid pressed out of the pulp, and the pulp is pressed in the roll nip, or the press nip, between the press rolls, whereby liquid is pressed out of the pulp. The roll press also includes one or more washing zones prior to the press nip.

One example of such a roll press is disclosed in EP 1 035 250, where the axes of rotation of the press rolls are lying in substantially the same horizontal plane. The pulp is fed in the direction of rotation of the press rolls through the press nip and the pulp passes the press nip between the press rolls from below upwards.

In prior art roll presses, it is known to provide a press roll which laterally movable relative to the other to vary the press nip between the press rolls. The cross-section of the press nip, or the distance between the press rolls, is one of the operating parameters which affect the quality of the washed and dewatered pulp. US 3, 730, 079 discloses a roll press comprising two press rolls rotatable about parallel axes, wherein one of the press rolls is laterally movable relative to the other to vary the cross-section of the therebetween press nip. Pressing force is applied to the laterally movable press roll by a plurality of separate link systems actuated by individual fluid pressure operated actuators. Pneumatically expansible tubes or springs are provided to force the movable press roll away from the other. The object of this press is to maintain the axes of the press rolls parallel while permitting relative lateral movement of the press rolls.

### The Object of the Invention

There is a need for an improved processing of pulp in an apparatus for washing and dewatering pulp comprising two rotatable press rolls, which more accurately provides pulp with the quality which is desired, and which increases the capacity of the apparatus. In order to attain an improved processing of pulp it is important to obtain an adequate determination of the linear load which acts on the pulp in the press nip and is affected by the torque of the press rolls.

In most prior art apparatus having a stationary rotatable first press roll and a rotatable second press roll which is laterally movable relative to the first press roll to vary the press nip, the lateral movement of the second press roll is attained by friction rails, normally made of a plastic material, on which the bearing housings, provided with bearings in which the laterally movable second press roll is journalled, rest and slide. The linear load is determined by measuring the load on the bearing housings of the movable second press roll. The load cells used for determining the linear load are thus situated between the sliding bearing housings and the casing housing the press rolls. During operation when the bearing housings slide back and forth on the friction rails, the frictions rails are subjected to wear and the friction between the sliding bearing housings and the friction rails is therefore not the same over time but is continuously changing. The wear on the friction rails negatively affects the determination of the linear load and is a source of errors. Consequently, the linear load can not be adequately determined, and pulp having the quality which is desired can not be produced from the roll press.

The object of the present invention is thus to provide an improved processing of pulp in an apparatus for washing and dewatering pulp comprising two rotatable press rolls.

### Summary of the Invention

The above-mentioned object is achieved by providing an apparatus as defined in the enclosed claim 1.

In addition to the source of errors because of the wear on the friction rails, the inventors of the present invention have also found that the force of the friction between the rails and the sliding bearing housing is also dependent on the vat pressure, i.e. the pressure within the vat, and other sources of errors. A determination of the linear load which must take the friction between the friction rails and the sliding bearing housing into account to a considerable extent can not present a satisfactory and accurate enough value of the linear load. By the apparatus according to the present invention, the above-mentioned friction rails can be excluded, and by laterally moving the first press roll relative to the other press roll by the innovative pivoting of the bearing housings of the first press roll about the first pivot axis, the friction in connection with the movement of the first press roll to vary the press nip is in principal unchanged during long term operation, since the contact surfaces pivoting in relation to each other about the first pivot axis are not sensitive to wear, and if subjected to wear, the wear's effect on the friction between said contact surfaces is minimal. Consequently, the accuracy of the determination of the linear load based on load cells measuring the load on the bearing housings is radically improved, whereby an improved processing of pulp in an apparatus for washing and dewatering pulp is provided.

Further, since the friction rails can be excluded, there is no longer a need for replacing worn out friction rails by new friction rails, which also reduces the costs for maintenance, since no stop of the roll press is necessary because of any change of friction rails.

In prior art, the movement of the laterally movable press roll and its bearing housings with substantially squared cross-sections has been strictly horizontal, and any deviation from the strict horizontal has not been considered.

According to an advantageous embodiment of the apparatus according to the present invention, the apparatus comprises a casing which houses said vat and the two press rolls, and each bearing housing of the first pair is pivotally attached to the casing via its first pivot axis. This pivotally attachment can be effected by a first means and a second means which are complementary to each other and pivotable in relation to each other, where the bearing housing of the first pair is provided with said first means and the casing is provided with said second means. For example, a pin can be provided on the casing and a recess can be provided in the bearing housing, which recess is complementary to and engaged by the pin. The pin and recess are pivotable in relation each other about the first pivot axis. Instead, the bearing housing could be provided with the pin and the casing could be provided with the recess.

The vat pressure tends to elevate the movable press roll in an upward direction. In prior art apparatus, the weight of the end casing members, i.e. the gables, of the apparatus, must be great so that the casing can withstand the forces of the vat pressure on the movable press roll. The innovative attachment of the first press roll to the casing, advantageously to the end casing members, via the first pivot axis balances the upward force originating from the vat pressure, and the casing including the end casing members can be manufactured using less material, providing end casing members and a casing of a reduced weight which still efficiently withstand the forces originating from the vat pressure.

Further, in prior art apparatus there is a need for a strong, bulky and heavy mechanism which applies a force on the movable first press roll and its bearing housing in the direction towards the stationary press roll to counter act the force produced in the press nip which forces the movable press roll away from the stationary press roll. Further, the overall casing must be strong and heavy to handle the forces originating from the press nip. Because of the innovative attachment of the first press roll to the casing, advantageously to the end casing members, via the first pivot axis, the weight and size of said mechanism can be reduced and the weight of the casing can be further reduced. Since said mechanism and the casing of the apparatus can be produced using less material, providing a low-weight apparatus, the apparatus is easier to transport and install, and also less expensive to manufacture.

According to a further advantageous embodiment of the apparatus according to the present invention, the ends of the second press roll are journalled in bearings of bearing housings of a second pair, which bearing housings are mounted to the casing, each bearing housing of the first pair and the opposite bearing housing of the second pair are connected to each other by an adjusting device, which adjusting device is adapted to force the first press roll away from and towards the second press roll, respectively, and the adjusting device is pivotally attached to the bearing housing of the first pair via a second pivot axis which is displaced in relation to the first pivot axis and the axis of rotation of the first press roll.

By the arrangement where the second pivot axis is displaced in relation to the axis of rotation of the first press roll, the adjusting device is subjected to less stress and forces, as would be the case if the adjusting device was attached to the bearing housing via the axis of rotation, whereby the adjusting device can be less strong and have a less complicated, or less advanced, structure, and the adjusting device can thus be more light-weight and less expensive to produce.

The adjusting device is advantageously controlled by a control system, or a control device, which controls the processing of the apparatus by setting one or several variable operating parameters, which setting is based on measurements and determinations of several control parameters, inter alia the linear load.

According to another advantageous embodiment of the apparatus according to the present invention, where the adjusting device is pivotally attached to the bearing housing of the first pair via said second pivot axis, the second pivot axis is positioned between the axis of rotation of the first press roll and the press nip.

According to yet another advantageous embodiment of the apparatus according to the present invention, where the adjusting device is pivotally attached to the bearing housing of the first pair via said second pivot axis, when the axes of rotation of the two press rolls are in the same plane which is substantially parallel to the plane on which the apparatus rests, the first pivot axis and the axis of rotation of the first press roll lie in the same plane which is substantially transverse to the plane on which the apparatus rests.

According to still another advantageous embodiment of the apparatus according to the present invention, where the adjusting device is pivotally attached to the bearing housing of the first pair via said second pivot axis, when the axes of rotation of the two press rolls are in the same plane which is substantially parallel to the plane on which the apparatus rests, the first pivot axis and the second pivot axis are positioned on different sides of said plane in which the axes of rotation of the two press rolls lie.

By the above-mentioned innovative attachments of the adjusting device, where the second pivot axis is displaced in relation to both the first pivot axis and the axis of rotation of the first press roll, the adjusting device is subjected to less stress and forces in relation to an adjusting device attached to the bearing housing via the axis of rotation.

By the above-mentioned displacements of the second pivot axis from the first pivot axis, a "leverage effect" is attained, whereby less force is required to force the movable first press roll towards the other stationary press roll. The longer distance between the first pivot axis and the second pivot axis, the more prominent the "leverage effect" becomes, and the adjusting device is also subjected to less stress and forces during operation and can thus be less strong and have a less complicated, or less advanced, structure, and can thus be made of less material.

By attaching the adjusting device to the first press roll's bearing housing via a second pivot axis displaced in relation to the axis of rotation of the first press roll, and also by attaching the adjusting device to the second press roll's bearing housing via a third pivot axis displaced in relation to the axis of rotation of the second press roll, the longitudinal extension of the adjusting device can be reduced and thus be manufactured using even less material making it even less expensive to produce.

According to another advantageous embodiment of the apparatus according to the present invention, where the apparatus comprises the above-mentioned adjusting device, the casing comprises two end casing members between which the press rolls are installed, and each end casing member comprises a beam to which both a bearing housing of the first pair and the opposite bearing housing of the second pair are attached. By this embodiment, an advantageous distribution of the forces acting on the casing and on the bearing housings is attained, whereby the end casing members, the over all casing and the bearing housings are not required to withstand as great forces as in prior art apparatus, and can thus be manufactured using less material, whereby the apparatus is easier to transport and install on site.

According to still another advantageous embodiment of the apparatus according to the present invention, the adjusting device is in the form of a hydraulic driving device. By using a hydraulic driving device, an efficient control of the movable press roll and of the size of the press nip is achieved. However, also other devices for adjusting the distance between the press rolls are possible, such as devices based on electromechanics.

According to yet another advantageous embodiment of the apparatus according to the present invention, where the apparatus comprises the above-mentioned adjusting device, one bearing housing of the first pair, the opposite bearing housing of the second pair and the adjusting device connecting them comprise a first set and a second set of complementary attachment means, the adjusting device is pivotally attached to the bearing housing of the first pair by means of the first set and pivotally attached to the bearing housing of the second pair via a third pivot axis by means of the second set, and at least one of the sets comprises at least one force sensor for measuring forces acting on that set of attachment means to determine the linear load acting on the pulp in the press nip.

The above-mentioned innovative position of the force sensor provides for a load measuring which corresponds more accurately to the force originating from the press nip and acting on the press roll, which results in an improved and more effective determination of the linear load, whereby a further improved processing of pulp is provided.

Further, in prior art, the bearing housings, the end casing members, or gables, to which the bearing housings are attached, and the region between the sliding bearing housings and the casing housing where the load cell is positioned in prior art are exposed to the heat from the vat. When there is a change in vat temperature there is also a temperature change in the region of the load cell. Thus, in prior art, the load cell is affected by heat and temperature changes which deteriorates the performance of the load cell. This affects the determination of the linear load and is a source of errors. Because of poor determination of the linear load based on deteriorated performance of the load cell, the process can not be controlled efficiently enough, and pulp having the quality which is desired can not be produced from the roll press.

By the innovative location of the force sensor for measuring the forces acting on the bearing housing, the force sensor is situated at a position where the influence of the heat from the vat and the resulting heat changes is minimal, whereby the performance of the force sensor is radically improved and gives an accurate measurement of the forces acting on the bearing housing, and consequently, the linear load acting on the pulp in the press nip can be more accurately and efficiently determined. Hereby, the processing of pulp is efficiently improved. Further, because of the more suitable environment of the force sensor according to the present invention, the force sensor is subjected to less wear, as the heat exposure is lower and the temperature around the force sensor is kept at a more even level. However, the innovative position of the force sensor also provides for an easy and uncomplicated replacement of the force sensor if necessary.

According to an advantageous embodiment of the apparatus according to the present invention, the first set comprises the at least one force sensor. Tests performed by the inventors have shown that this position of the force sensor is advantageous in order to accurately determine the linear load.

According to a further advantageous embodiment of the apparatus according to the present invention, the complementary attachment means of the set, which comprises the at least one force sensor, comprise an attachment element and at least one recess which the attachment element engages, the attachment element and the recess being pivotable in relation to each other about the second pivot axis or the third pivot axis, and the attachment element is provided with said at least one force sensor. Tests performed by inventors have shown that this position of the force sensor is especially advantageous in order to accurately determine the linear load

According to another advantageous embodiment of the apparatus according to the present invention, the at least one force sensor is included in a cylindrical load cell, and the attachment element is cylindrical and houses the load cell. This embodiment provides for an efficient installation of the force sensors at the above-mentioned location.

The axes of rotation of the two press rolls can be in the same plane which is substantially parallel to the plane on which the apparatus rests and, and the movable press roll is then laterally movable in relation to the other, or the axes of rotation of the press rolls can be positioned in other ways.

Further advantageous embodiments of the apparatus according to the present invention and further advantages of the apparatus according to the present invention emerge from the detailed description of preferred embodiments.

### Brief Description of the Drawings

The present invention will now be described, for exemplary purposes, in more detail by way of embodiments and with reference to the enclosed drawings, in which:
- Fig. 1: is a schematic view of an embodiment of the apparatus according to present invention,
- Fig. 2: is a schematic view illustrating bearing housings of the apparatus of Fig. 1,
- Fig. 3: is a schematic section view illustrating an embodiment of a set of complementary attachment means according to the present invention, and
- Fig. 4: is a schematic view of the set of complementary attachment means of Fig. 3 seen from above.

### Detailed Description of Preferred Embodiments

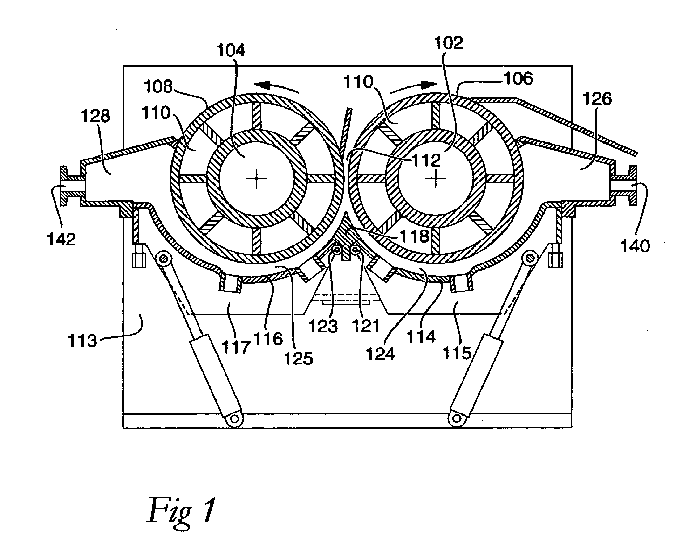

Fig. 1 schematically shows an embodiment of the apparatus for washing and dewatering cellulose-containing pulp according to the present invention provided with an embodiment of the system according to the present invention schematically illustrated with blocks. The apparatus comprises a first rotatable press roll 102 and a second rotatable press roll 104, each press roll 102, 104 having a permeable outer surface 106, 108 which is perforated, i.e. provided with apertures, whereby the outer surface 106, 108 is permeable to filtrate pressed out of the pulp. The shape of the apertures is normally circular, but any shape is possible. The press rolls 102, 104 comprise a number of filtrate channels 110 radially inwards of the outer surface 106, 108 to lead evacuated filtrate away. The two press rolls 102, 104 defines a press/roll nip 112 between them, in which press nip 112 the pulp is pressed, and are arranged to rotate in opposite directions, the left press roll 104 being arranged to rotate in counter clockwise direction and the right press roll 102 being arranged to rotate in clockwise direction. The apparatus is arranged to feed the pulp in the direction of rotation of the press rolls 102, 104 through the press nip 112. The axes of rotation of the press rolls 102, 104 being in substantially the same horizontal plane, and the apparatus is arranged to feed the pulp through the press nip 112 in a substantially vertical direction from below upwards. One of the press roll 102, 104, herein the first press roll 102, is laterally movable in relation to the other press roll 104 to vary the press nip 112 under the operation of the apparatus. The processing of the pulp in the apparatus is determined by a set of variable operating parameters which are variable during operation. The cross-section of the press nip is on of these operating parameters.

The apparatus comprises a casing 113 which includes a vat 114, 116, 118 in which the press rolls 102, 104 are installed, the vat 114, 116, 118 partly enclosing the outer surface 106, 108 of each press roll 102, 104, whereby a gap 124, 125 for each press roll 102, 104 is defined, limited by the vat 114, 116, 118 and the outer surface 106, 108 of the respective press roll 102, 104. The vat 114, 116, 118 can be pressurized and comprises a first side vat segment 114 which partly encloses the outer surface 106 of the first press roll 102, and a second side vat segment 116 which partly encloses the outer surface 108 of the second press roll 104. In the gap a vat pressure is built up during operation which tends to elevate the press rolls 102, 104 in an upward substantially vertical direction.

Said casing 113 comprises a first casing member 115 which extends between the ends of the first press roll 102 and to which the first side vat segment 114 is mounted, and a second casing member 117 which extends between the ends of the second press roll 104 and to which the second side vat segment 116 is mounted. The first casing members 115 is pivotable about a first axis 121 and the second casing members 117 is pivotable about a second axis 123, whereby the casing members 115, 117, together with their side vat segments 114, 116, are movable between a closed position and an opened position for providing access to the press rolls 102, 104. Further, the vat 114, 116, 118 comprises a central vat segment 118 partly enclosing the outer surface 106, 108 of the press rolls 102, 104 between the press nip 112 and the side vat segments 114, 116.

The apparatus comprises a first pulp distribution device 126 for distributing pulp on the first press roll 102 and a second pulp distribution device 128 for distributing pulp on the second press roll 104. The pulp distribution devices 126, 128 are arranged to distribute pulp to the gap 124 along the whole length of each press roll 102, 104. The pulp distributed on the outer surface 106, 108 of the press roll 102, 104 forms a mat on the press rolls 102, 104. Herein, the pulp distribution device 126, 128 is in the form of a pulp distribution screw. However, other kinds of pulp distribution devices are possible. The pulp distribution device 126, 128 can also comprise several separate pulp distribution means distributed one after the other along the longitudinal extension of the press roll 102, 104. Each pulp distribution device 126, 128 is connectable to a pulp supplying system via connection means 140, 142, and the supplying system supplies pulp to each pulp distribution device 126, 128.

The apparatus also includes a pulp transport screw (not shown), which for example can be in the form of a pulp disintegrating screw or a shredder screw, towards which the pulp which has been pressed in the press nip 112 is conveyed. The pulp transport screw extends parallelly to the longitudinal axes of the press rolls 102, 104, and is arranged to disintegrate the pulp and transport the pulp axially away from the press for further processing.

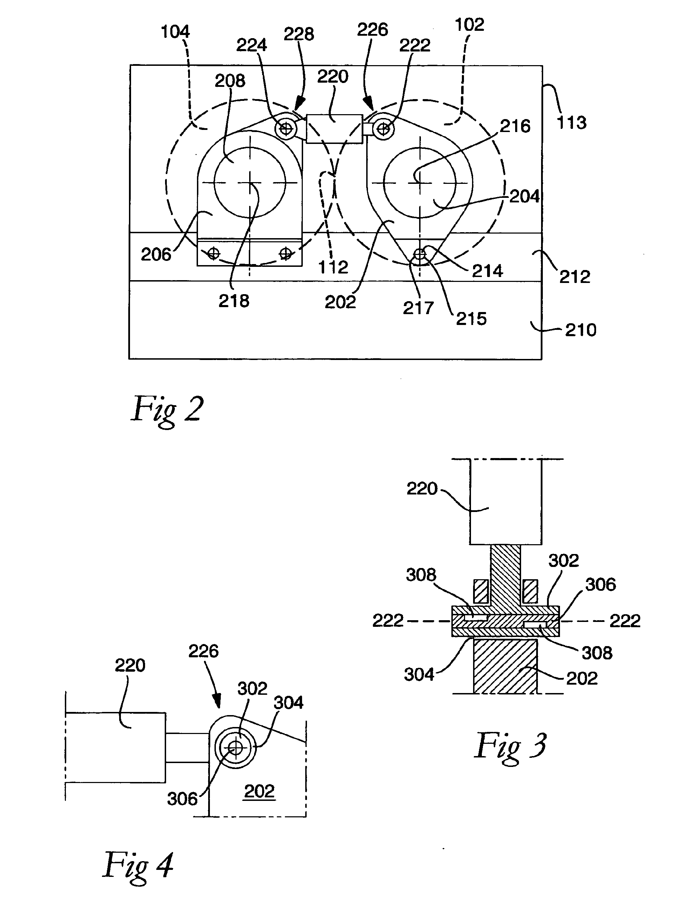

With reference to Fig. 2, the apparatus includes a first pair of bearing housings 202 provided with bearings 204, in which bearings 204 the ends of the first press roll 102 are journalled, and a second pair of bearing housings 206 provided with bearings 208, in which bearings 208 the ends of the second press roll 104 are journalled. In Fig. 2, only one of the bearing housings 202 of the first pair and the opposite bearing housing 206 of the second pair are shown. The casing 113 of the apparatus includes two end casing members 210 (only one end casing member is shown in Fig. 2) between which the press rolls 102, 104 are installed, and each end casing member 210 comprises a beam 212 to which both a bearing housing 202 of the first pair and the opposite bearing housing 206 of the second pair are attached. The bearing housing 202 of the first pair is pivotally attached to the beam 212 via a first pivot axis 214 which is displaced in relation to the axis of rotation 216 of the first press roll 102, and the bearing housings 202 of the first pair are adapted to move the first press roll 102 in relation to the second press roll 104 by pivoting about their first pivot axes 214. The bearing housings 206 of the second pair are fixedly attached to the beam 212. The pivotally attachment of the bearing housings 202 of the first pair to the beam 212 is effected by a pin 215 provided on each bearing housing 202 and a recess 217 provided in each beam 212, which recess 217 is complementary to and engaged by the pin 215. The pin 215 and recess 217 are pivotable in relation each other about the first pivot axis 214.

The apparatus rests on a plane, and the axis of rotation 218 of the second press roll 104 and the axis of rotation 216 of the first press roll 102 are in the same plane which is substantially horizontal and substantially parallel to the plane on which apparatus rests. The first pivot axis 214 and the axis of rotation 216 of the first press roll 102 lie in the same plane which is transverse to the plane on which the apparatus rests.

Each bearing housing 202 of the first pair and the opposite bearing housing 206 of the second pair are connected to each other by an adjusting device 220. in the form of a hydraulic driving device, more precisely a hydraulic cylinder in the disclosed embodiment. The adjusting devices 220, one provided at one end of the apparatus and the other provided at the other end of the apparatus, are adapted to force the laterally movable press roll 102 away from the stationary second press roll 104 and towards the second press roll 104 for providing a specific distance between the press rolls 102, 104 and for keeping this distance. The adjusting device 220 is pivotally attached to the bearing housing 202 of the first pair via a second pivot axis 222, which is displaced in relation to the first pivot axis 214 and the axis of rotation 216 of the first press roll 102, and pivotally attached to the bearing housing 206 of the second pair via a third pivot axis 224, which is displaced in relation to the axis of rotation 218 of the second press roll 104. The adjusting devices 220 are adapted to perform the lateral movement of the first press roll 102 by pivoting the bearing housings 202 of the first pair about their first pivot axes 214.

The first pivot axis 214 and the second pivot axis 222 are positioned on different sides of the plane in which the axes of rotation 216, 218 of the press rolls 102, 104 lie, which plane is substantially parallel to the plane on which the apparatus rests. The second pivot axis 222 is positioned between the axis of rotation 216 of the first press roll 102 and the press nip 212, and the third pivot axis 224 is positioned between the axis of rotation 218 of the second press roll 104 and the press nip 212. The adjusting device 220 is pivotally attached to the bearing housing 202 of the first pair by means of a first set 226 of complementary attachment means, and the adjusting device 220 is pivotally attached to the bearing housing 206 of the second pair by means of a second set 228 of complementary attachment means.

In this embodiment, the complementary attachment means of the first set 226 generally correspond to the complementary attachment means of the second set 228. With reference to Figs. 3 and 4, the complementary attachment means of the first set 226 will now be described in more detail. The adjusting device 220 is provided with a first attachment means of the first set 226, which includes a circular-cylindrical attachment element 302. The bearing housings 202 of the first pair is provided with a second attachment means of the first set 226, which includes a recess 304 which is complementary to the cylindrical attachment element 302. The attachment element 302 engages the recess 304, and the attachment element 302 and the recess 304 are pivotable in relation to each other about the second pivot axis 222. The attachment element 302 houses a cylindrical load cell 306 provided with several force sensors 308 for measuring forces acting on the cylindrical attachment element 302, which measurement then is used for determining the linear load acting on the pulp in the press nip 112. Hereby, a load measuring is provided, which corresponds more accurately to the force originating from the press nip and acting on the first press roll 102, which results in an improved and more effective determination of the linear load, whereby a further improved processing of pulp is provided.

By the present invention, the performance and the flexibility of a roll press are improved since the press nip can be more efficiently controlled based on a more accurate and more easy determination of the linear load, whereby the capacity of the apparatus is improved, and a desired quality of the pressed pulp is attained in an efficient way.

## Claims

1. An apparatus for washing and/or dewatering pulp comprising a first press roll (102) and a second press roll (104), each press roll (102, 104) being rotatable about an axis of rotation (216, 218) and having a permeable outer surface (106, 108), and a vat (114, 116, 118) in which the press rolls (102, 104) are installed, the press rolls (102, 104) defining a press nip (112) between them, in which press nip (112) the pulp is pressed, and the apparatus is arranged to feed the pulp in the direction of rotation of the press rolls (102, 104) through the press nip (112), the first press roll (102) being movable in relation to the second press roll (102, 104) to vary the press nip (112), the apparatus comprises a first pair of bearing housings (202) provided with bearings (204) in which the ends of the first press roll (102) are journalled, **characterized in that** each bearing housing (202) of the first pair is pivotable about a first pivot axis (214) which is displaced in relation to the axis of rotation (216) of the first press roll (102), and **in that** the bearing housings (202) of the first pair are adapted to move the first press roll (102) in relation to the second press roll (104) by pivoting about their first pivot axes (214).

2. An apparatus according to claim 1, **characterized in that** the apparatus comprises a casing (113) which houses said vat (114, 116, 118) and the two press rolls (102, 104), and **in that** each bearing housing (202) of the first pair is pivotally attached to the casing (113) via its first pivot axis (214).

3. An apparatus according to claim 2, **characterized in that** the ends of the second press roll (104) are journalled in bearings (208) of bearing housings (206) of a second pair, which bearing housings (206) are mounted to the casing (113), **in that** each bearing housing (202) of the first pair and the opposite bearing housing (206) of the second pair are connected to each other by an adjusting device (220), which adjusting device (220) is adapted to force the first press roll (102) away from and towards the second press roll (104), respectively, and **in that** the adjusting device (220) is pivotally attached to the bearing housing (202) of the first pair via a second pivot axis (222) which is displaced in relation to the first pivot axis (214) and the axis of rotation (216) of the first press roll (102).

4. An apparatus according to claim 3, **characterized in that** the casing (113) comprises two end casing members (210) between which the press rolls (102, 104) are installed, and **in that** each end casing member (210) comprises a beam (212) to which both a bearing housing (202) of the first pair and the opposite bearing housing (206) of the second pair are attached.

5. An apparatus according to claim 3 or 4, **characterized in that** the adjusting device (220) is in the form of a hydraulic driving device.

6. An apparatus according to any of the claims 3 to 5, **characterized in that** one bearing housing (202) of the first pair, the opposite bearing housing (206) of the second pair and the adjusting device (220) connecting them comprise a first set (226) and a second set (228) of complementary attachment means, **in that** the adjusting device (220) is pivotally attached to the bearing housing (202) of the first pair by means of the first set (226) and pivotally attached to the bearing housing (206) of the second pair via a third pivot axis (224) by means of the second set (228), and **in that** at least one of the sets (226, 228) comprises at least one force sensor (308) for measuring forces acting on that set (226, 228) of attachment means to determine the linear load acting on the pulp in the press nip (112).

7. An apparatus according to claim 6, **characterized in that** the first set (226) comprises the at least one force sensor (308).

8. An apparatus according to claim 6 or 7, **characterized in that** the complementary attachment means of the set (226, 228), which comprises the at least one force sensor (308), comprise an attachment element (302) and at least one recess (304) which the attachment element (302) engages, the attachment element (302) and the recess (304) being pivotable in relation to each other about the second pivot axis (222) or the third pivot axis (224), and **in that** the attachment element (302) is provided with said at least one force sensor (308).

9. An apparatus according to claim 8, **characterized in that** the at least one force sensor (308) is included in a cylindrical load cell (306), and **in that** the attachment element (302) is cylindrical and houses the load cell (306).

## Patentansprüche

1. Apparat zum Waschen und/oder Entwässern von Pülpe, umfassend eine erste Pressrolle (102) und eine zweite Pressrolle (104), jede Pressrolle (102, 104) ist um eine Drehachse (216, 218) drehbar und besitzt eine durchlässige äußere Oberfläche (106, 108); weiters umfassend eine Trog (114, 116, 118), in dem die Pressrollen (102, 104) installiert sind, die Pressrollen (102, 104) definieren einen Pressspalt zwischen sich, in welchem Pressspalt (112) die Pülpe gepresst wird, der Apparat ist so angeordnet, dass die Pülpe dem Pressschlitz (112) in der Richtung der Rotation der Pressrollen (102, 104) zugeführt wird, die erste Pressrolle (102) ist bezüglich der zweiten Pressrolle (102, 104) so beweglich, dass der Pressschlitz (112) variiert, die Vorrichtung umfasst ein erstes Paar von Lagergehäusen (202), die mit Lagern (204) versehen sind, in denen die Enden der erste Pressrolle (102) gelagert sind, **dadurch gekennzeichnet, dass** jedes Lagergehäuse (202) des ersten Paares um eine erste Drehachse (214) verdrehbar ist, wobei die erste Drehachse (214) bezüglich der Drehachse (216) der ersten Pressrolle (102) versetzt ist, und dadurch, dass die Lagergehäuse (202) des ersten Paares so vorgesehen sind, dass sie die erste Pressrolle (102) bezüglich der zweiten Pressrolle (104) durch Schwenken um ihre erste Drehachse (214) bewegen.

2. Apparat nach Anspruch 1, **dadurch gekennzeichnet, dass** der Apparat ein Gehäuse (113) aufweist, das den genannten Trog (114, 116, 118) und die beiden Pressrollen (102, 104) umgibt, und dadurch, dass jedes Lagergehäuse (202) des ersten Paares drehbar über seine erste Drehachse (214) an Gehäuse (113) befestigt ist.

3. Apparat nach Anspruch 2, **dadurch gekennzeichnet, dass** die Enden der zweiten Pressrolle (104) in Lagern (208) gelagert sind, die in Lagergehäusen (206) eines zweiten Paares angeordnet sind, wobei die Lagergehäuse (206) am Gehäuse (113) befestigt sind, und dadurch, dass jedes Lagergehäuse (202) des ersten Paares und die gegenüberliegenden Lagergehäuse (206) des zweiten Paares miteinander über eine Adjustierungsvorrichtung (220) verbunden sind, welche Adjustierungsvorrichtung (220) so ausgebildet ist, dass sie die erste Pressrolle (102) zur zweiten Pressrolle (104) hin und von ihr weg bewegt, und dadurch, dass die Adjustierungsvorrichtung (220) drehbar mit dem Lagergehäuse (202) des ersten Paares über eine zweite Drehachse (222) verbunden ist, die bezüglich der ersten Drehachse (214) und der Drehachse (216) der ersten Pressrolle (102) versetzt ist.

4. Apparat nach Anspruch 3, **dadurch gekennzeichnet, dass** das Gehäuse (113) zwei Gehäuseendteile (210) aufweist, zwischen denen die Pressrollen (102, 104) installiert sind, und dadurch, dass jedes Gehäuseendteil (210) einen Balken (212) umfasst, an dem sowohl ein Lagergehäuse (202) des ersten Paares als auch das gegenüberliegende Lagergehäuse (206) des zweiten Paares befestigt sind.

5. Apparat nach Anspruch 3 oder 4, **dadurch gekennzeichnet, dass** die Adjustierungsvorrichtung (220) die Form einer hydraulischen Antriebsvorrichtung aufweist.

6. Apparat nach einem der Ansprüche 3 bis 5, **dadurch gekennzeichnet, dass** ein Lagergehäuse (202) des ersten Paares, das gegenüberliegende Lagergehäuse (206) des zweiten Paares und die Adjustierungsvorrichtung (220), die diese verbindet, einen ersten Satz (226) und einen zweiten Satz (228) komplementärer Befestigungsmittel umfasst, und dadurch, dass die Adjustierungsvorrichtung (220) drehbar mit dem Lagergehäuse (202) des ersten Paares mittels des ersten Satzes (226) befestigt ist und drehbar mit dem Lagergehäuse (206) des zweiten Paares über eine dritte Drehachse (224) mittels des zweiten Satzes (228) verbunden ist, und dadurch, dass zumindest einer der Sätze (226, 228) zumindest einen Kraftsensor (308) aufweist, um die Kräfte zu messen, die auf den Satz (226, 228) des Aufbaus wirken, um die lineare Last, die auf die Pülpe im Pressschlitz (112) wirkt, zu bestimmen.

7. Apparat nach Anspruch 6 **dadurch gekennzeichnet, dass** der erste Satz (226) zumindest einen Kraftsensor (308) aufweist.

8. Apparat nach Anspruch 6 oder 7, **dadurch gekennzeichnet, dass** die komplementären Befestigungsmittel des Satzes (226, 228), der den zumindest einen Kraftsensor (308) aufweist, ein Befestigungselement (302) und zumindest einen Rücksprung (304) aufweist, der mit dem Befestigungselement (302) zusammenwirkt, das Befestigungselement (302) und der Rücksprung (304) sind relativ zueinander um die zweite Drehachse (222) oder die dritte Drehachse (224) drehbar, und dadurch, dass das Befestigungselement (302) mit dem zumindest einen Kraftsensor (308) versehen ist.

9. Apparat nach Anspruch 8, **dadurch gekennzeichnet, dass** der zumindest eine Kraftsensor (308) in einer zylindrischen Lastkammer (306) eingelassen ist, und dadurch, dass das Befestigungselement (302) zylindrisch ausgebildet ist, und die Lastkammer (306) aufnimmt.

## Revendications

1. Appareil destiné à laver et/ou à déshydrater une pâte à papier, comportant un premier rouleau presseur (102) et un second rouleau presseur (104), chaque rouleau presseur (102, 104) pouvant tourner autour d'un axe de rotation (216, 218) et présentant une surface extérieure perméable (106, 108) et comportant une cuve (114, 116, 118) dans laquelle les rouleaux presseurs (102, 104) sont placés, les rouleaux presseurs (102, 104) définissant une emprise sous pression (112) entre eux, emprise sous pression (112) dans laquelle la pâte à papier est compressée, et l'appareil est conçu en vue de fournir la pâte à papier dans le sens de rotation des rouleaux presseurs (102, 104) à travers l'emprise sous pression (112), le premier rouleau presseur (102) pouvant se déplacer par rapport au second rouleau presseur (102, 104) pour modifier l'emprise sous pression (112), l'appareil comprend une première paire de logements de palier (202) prévus avec les paliers (204) dans lesquels les extrémités du premier rouleau presseur (102) sont tourillonnées, **caractérisé en ce que** chaque logement de palier (202) de la première paire peut pivoter autour d'un premier axe de pivotement (214) qui est déplacé par rapport à l'axe de rotation (216) du premier rouleau presseur (102), et **en ce que** les logements de palier (202) de la première paire sont conçus pour déplacer le premier rouleau presseur (102) par rapport au second rouleau presseur (104) par pivotement autour de leurs premiers axes de pivotement (214).

2. Appareil selon la revendication 1, **caractérisé en ce que** l'appareil comporte une enceinte (113) qui loge ladite cuve (114, 116, 118) et les deux rouleaux presseurs (102, 104) et **en ce que** chaque logement de palier (202) de la première paire est fixé à pivotement à l'enceinte (113) par l'intermédiaire de son premier axe de pivotement (214).

3. Appareil selon la revendication 2, **caractérisé en ce que** les extrémités du second rouleau presseur (104) sont tourillonnées dans les paliers (208) des logements de palier (206) d'une seconde paire, lesquels logements de palier (206) sont montés sur l'enceinte (113), **en ce que** chaque logement de palier (202) de la première paire et le logement de palier opposé (206) de la seconde paire sont raccordés l'un à l'autre par un dispositif de réglage (220), lequel dispositif de réglage (220) est conçu pour forcer le premier rouleau presseur (102) à s'éloigner et à se rapprocher du second rouleau presseur (104), respectivement, et **en ce que** le dispositif de réglage (220) est fixé à pivotement sur le logement de palier (202) de la première paire par l'intermédiaire d'un second axe de pivotement (222), lequel se déplace par rapport au premier axe de pivotement (214) et à l'axe de rotation (216) du premier rouleau presseur (102).

4. Appareil selon la revendication 3, **caractérisé en ce que** l'enceinte (113) comporte deux éléments d'enceinte d'extrémité (210) entre lesquels les rouleaux presseurs (102, 104) sont mis en place, et **en ce que** chaque élément d'enceinte d'extrémité (210) comporte un montant (212) sur lequel un logement de palier (202) de la première paire et le logement de palier opposé (206) de la seconde paire sont tous deux fixés.

5. Appareil selon la revendication 3 ou 4, **caractérisé en ce que** le dispositif de réglage (220) se présente sous la forme d'un dispositif à entraînement hydraulique.

6. Appareil selon l'une quelconque des revendications 3 à 5, **caractérisé en ce qu'**un logement de palier (202) de la première paire, le logement de palier opposé (206) de la seconde paire et le dispositif de réglage (220) les raccordant comportent un premier ensemble (226) et un second ensemble (228) de moyens de fixation complémentaires, **en ce que** le dispositif de réglage (220) est fixé à pivotement au logement de palier (202) de la première paire au moyen du premier ensemble (226) et est fixé à pivotement au logement de palier (206) de la seconde paire par l'intermédiaire d'un troisième axe de pivotement (224) au moyen du second ensemble (228), et **en ce que** au moins l'un des ensembles (226, 228) comporte au moins un capteur de force (308) pour mesurer les forces s'exerçant sur cet ensemble (226, 228) des moyens de fixation afin de déterminer la charge linéaire agissant sur la pâte à papier dans l'emprise sous pression (112).

7. Appareil selon la revendication 6, **caractérisé en ce que** le premier ensemble (226) comporte le, au moins un, capteur de force (308).

8. Appareil selon la revendication 6 ou 7, **caractérisé en ce que** les moyens de fixation complémentaires de l'ensemble (226, 228) qui comporte le, au moins un, capteur de force (308) comportent un élément de fixation (302) et au moins une partie creuse (304) dans lequel l'élément de fixation (302) s'engage, l'élément de fixation (302) et la partie creuse (304) pouvant pivoter l'un par rapport à l'autre autour du deuxième axe de pivotement (222) ou du troisième axe de pivotement (224), et **en ce que** l'élément de fixation (302) est prévu avec ledit, au moins un, capteur de force (308).

9. Appareil selon la revendication 8, **caractérisé en ce que** au moins un capteur de force (308) est inclus dans une boîte dynamométrique cylindrique (306), et **en ce que** l'élément de fixation (302) est cylindrique et loge la boîte dynamométrique (306).
